# EUROPÄISCHE PATENTSCHRIFT

(11) **EP 2 710 904 B1**
(45) Veröffentlichungstag und Bekanntmachung des Hinweises auf die Patenterteilung: **02.09.2026**
(21) Anmeldenummer: 13184776.6
(22) Anmeldetag: 17.09.2013
(51) Int. Cl.: A23L 2/52, A23L 2/39, A23L 17/60

(54) **Sportgetränk mit Algenpulver**
Sports drink with algae powder
Boisson sportive à la poudre d'algue

(30) Priorität: 20.09.2012 DE 102012108840
(43) Veröffentlichungstag der Anmeldung: 26.03.2014
(73) Patentinhaber: PM-International AG, 5445 Schengen (LU)
(72) Erfinder: Sorg, Rolf, 5444 Schengen (LU); Kühne, Dr. Tobias, 54497 Morbach (DE); Lauinger, Christian, 76275 Ettlingen (DE); Iken, Dr. Marcus, 67105 Schifferstadt (DE); Messer, Wilhelm, 54451 Irsch (DE)
(74) Vertreter: Meissner Bolte Partnerschaft mbB

(56) Entgegenhaltungen:
- WO-A1-2010/120923
- WO-A2-2009/099628
- US-A1- 2006 210 688
- US-A1- 2010 239 712
- US-A1- 2012 015 039
- JEUKENDRUP A. E.: "Carbohydrate and exercise performance: the role of multiple transportable carbohydrates", CURRENT OPINION IN CLINICAL NUTRITION AND METABOLIC CARE, vol. 13, no. 4, 1 July 2010 (2010-07-01), pages 452 - 457, XP055316340, DOI: 10.1097/MCO.0b013e328339de9f

## Beschreibung

Die Erfindung betrifft ein Sportgetränk bzw. ein Pulver oder Konzentration zum Anrühren eines solchen.

Derartige Sportgetränke sind im Stand der Technik bereits bekannt. Beispielsweise die DE 202 16 946 U1 beschreibt ein Fruchtsaftgetränk mit Holundersaft, Cranberrysaft, Süßmolkepulver und Carnitin. Dabei wird vorgeschlagen, Kohlenhydrate, Vitamine und Mineralstoffe zuzufügen. WO 2009/099628 A2 betrifft eine Zusammensetzung, um Tiere bei physischer Beanspruchung zu unterstützen. WO 2010/120923 A1 beschreibt die Benutzung von Algen in Nahrungsprodukten. US 2006/0210688 A1 offenbart ein Sportgetränk. Zuletzt sei hinsichtlich des Standes der Technik noch auf US 2012/001539 A1 und US 2010/0239712 A1 verwiesen.

Im Stand der Technik wird üblicherweise versucht, dem Körper einerseits Kohlenhydrate für die Energieversorgung und andererseits Mineralstoffe und Vitamine zuzuführen. Insgesamt wird der Ansatz im Stand der Technik als vergleichsweise "eindimensional" empfunden. Auf die Wechselwirkungen innerhalb des menschlichen Körpers wird vergleichsweise wenig Rücksicht genommen. Insgesamt wird die Nährstoffaufnahme während des Sports als verbesserungswürdig angesehen.

Es ist daher Aufgabe der vorliegenden Erfindung, die Nährstoffaufnahme durch den Sportler weiter zu verbessern, wobei die Belastung durch die Nährstoffaufnahme vergleichsweise niedrig sein soll.

Diese Aufgabe wird durch ein Sportgetränk, oder ein Pulver bzw. Konzentrat zum Anrühren eines solchen, gemäß Anspruch 1 gelöst.

Die Aufgabe wird durch ein Sportgetränk, oder Pulver bzw. Konzentrat zum Anrühren eines solchen, mit einer Kohlenhydratkomponente zur Energieversorgung, einem Algenpulver zur Verbesserung der Sauerstoffaufnahme und einer Vielzahl von Mineralstoffen sowie ggf. Vitaminen, in vorbestimmter Menge, gelöst.

Ein Kern der Erfindung liegt darin, dass neben einer Kohlenhydratkomponente und Mineralstoffen (ggf. Vitaminen) zusätzlich ein Algenpulver zur Verbesserung der Sauerstoffaufnahme bereitgestellt wird. Das Algenpulver (allgemein Algensubstanz) enthält Braunalgen. Durch die Algensubstanz kann der Sauerstoff-Antransport im menschlichen Zellsystem verbessert werden. Zellbarrieren werden besser durchdrungen, so dass den Zellen mehr Sauerstoff zugeführt werden kann. Das Algenpulver (die Algensubstanz) beträgt vorzugsweise mindestens 0,0001 Gew.-%, weiter vorzugsweise mindestens 0,001 Gew.-%, noch weiter vorzugsweise mindestens 0,1 Gew.-%. Die Obergrenze beträgt 0,5 Gew.-%. Ohne gegenteilige Angaben sind hier und im Folgenden Prozentangaben stets Gew.-%-Angaben ohne Berücksichtigung von Wasser.

Gemäß einer Weiterbildung wird ein Sportgetränk vorgeschlagen zur Aufnahme in einer ersten Phase vor der sportlichen Betätigung, in einer zweiten Phase während der sportlichen Betätigung und in einer dritten Phase nach der sportlichen Betätigung. Gemäß dieser Weiterbildung umfasst das Sportgetränk mindestens ein immunsystemunterstützendes Mittel, insbesondere mindestens ein Antioxidationsmittel zur Resorption während der ersten und dritten Phase und mindestens ein Kohlenhydrat zur Resorption insbesondere während der zweiten Phase sowie mindestens einen Kohlenhydratresorptionsverstärker zur Steigerung der Kohlenhydratresorption. Ein zentraler Gedanke dieser Weiterbildung liegt darin, ein Drei-Phasen-Sportgetränk bereitzustellen, das sich dadurch auszeichnet, dass in allen drei Phasen einer sportlichen Betätigung (vor, während und nach der sportlichen Betätigung) durch eine spezielle Wirkstoffzusammensetzung ein hoher Wirkungsgrad erzielt wird. Dabei wird gleichzeitig eine hohe Leistung des Sportlers ermöglicht sowie eine schnelle Regeneration. Erfindungsgemäß wurde erkannt, dass schon die Phase vor der sportlichen Betätigung besonders wichtig ist. Weiterhin wurde erkannt, dass der menschliche Körper während der sportlichen Betätigung weniger (bis keine) Mineralstoffe und Vitamine resorbiert (auch wenn diese zur Verfügung gestellt werden), jedoch Kohlenhydrate. Beim vorliegenden Sportgetränk dienen daher die vorgeschlagenen Mineralien auch weniger der Zufuhr in der zweiten Phase, sondern vielmehr dem Auffüllen des Mineralstoffvorrats im Körper während der ersten und dritten Phase.

Das Sportgetränk bzw. das Pulver oder Konzentrat umfasst eine erste kurzkettige Kohlenhydratkomponente zur schnellen Resorption, insbesondere im Dünndarm, zur schnellen Regeneration und Energiebereitstellung währen der sportlichen Betätigung, und mindestens eine langkettige Kohlenhydratkomponente zur verzögerten Bereitstellung einer zweiten kurzkettigen Kohlenhydratkomponente und verzögerte Resorption der zweiten kurzkettigen Kohlenhydratkomponente, insbesondere im Dickdarm. Besonders bevorzugt ist es, wenn erste und zweite kurzkettige Kohlenhydratkomponente identisch sind. Durch ein derartiges Sportgetränk wird dem Körper vergleichsweise viel Energie gleichzeitig zur Verfügung gestellt. Dies geschieht dadurch, dass verschiedene Aufnahmeorte für Kohlenhydrate genutzt werden. Insgesamt kann der Körper damit pro Zeiteinheit mehr Monosaccharide aufnehmen. Diese Monosaccharide werden vom Körper wiederum als Energieträger verwendet. Diese Weiterbildung zeichnet sich durch eine synergistische Wirkung zusammen mit dem Drei-Phasen-Gedanken und dem Sauerstoffaufnahmeverstärker (bzw. der Braunalgensubstanz) aus. Gemäß dieser Weiterbildung wurde insbesondere erkannt, dass Kohlenhydrat- und Sauerstoffaufnahme ausgewogen aufeinander abgestimmt werden sollten. Dies wird mit nur wenigen Komponenten durch das vorliegende Sportgetränk erreicht.

In verschiedenen Weiterbildungen liegt in dem Sportgetränk mindestens ein Monosaccharid, insbesondere Glucose und/oder Fructose, vor. Weiterhin kann alternativ oder zusätzlich mindestens ein Disaccharid, insbesondere Saccharose, enthalten sein. Weiterhin kann zusätzlich oder alternativ mindestens ein Oligosaccharid vorhanden sein. In diesem Zusammenhang soll unter Oligosaccharid insbesondere ein Kohlenhydrat verstanden werden, das aus 2 bis 10 Monosaccharid-Einheiten aufgebaut ist, insbesondere aus zwei bis fünf Monosaccharid-Einheiten. Entsprechend soll es sich bei einer kurzkettigen Kohlenhydratkomponente vorzugsweise um eine Kohlenhydratkomponente handeln, die aus 1 bis 10 Mono-saccharid-Einheiten, vorzugsweise 1 bis 5 Monosaccharid-Einheiten aufgebaut ist. In Abgrenzung dazu soll es sich bei der "langkettigen Kohlenhydratkomponente" bzw. bei Polysacchariden um ein Saccharid handeln, das vorzugsweise mehr als 10 Monosaccharid-Einheiten aufweist, insbesondere mehr als 100 Monosaccharid-Einheiten, weiter vorzugsweise mehr als 1.000 Monosaccharid-Einheiten.

Insgesamt dienen die Mono-, Di- und Oligosaccharide zur (schnellen) Regeneration und Energiebereitstellung während der sportlichen Betätigung. Es hat sich gezeigt, dass mit einen Mono-, Di- oder Oligosaccharid besonders viel Energie pro Zeiteinheit vom Körper aufgenommen werden kann.

Als langkettige Kohlenhydratkomponente kommt vorzugsweise Maltodextrin zum Einsatz. Maltodextrin kann bei guter Verträglichkeit besonders einfach zeitverzögert aufgeschlossen und anschließend resorbiert werden.

Ein Verhältnis der Summe der kurzkettigen Kohlenhydratkomponenten (insbesondere Glucose und/oder Fructose und/oder Saccharose) zu der langkettigen Kohlenhydratkomponente (insbesondere Maltodextrin) beträgt 100:1 bis 10:1, vorzugsweise 40:1 bis 60:1, weiter vorzugsweise (etwa) 50:1 betragen. Durch den vergleichsweise geringen Anteil der langkettigen Kohlenhydratkomponente wird insgesamt erreicht, dass durch die kurzkettige Kohlenhydratkomponente viel Energie zur Verfügung gestellt werden kann und durch die langkettige Kohlenhydratkomponente noch ein gewisses Plus erreicht wird, das die Leistungsfähigkeit des Sportlers insgesamt nochmals erhöht. Gleichzeitig wird jedoch durch den vergleichsweise geringen Anteil von Maltodextrin (allg.: der langkettigen Kohlenhydratkomponente) auch erreicht, dass der Körper insbesondere während der zweiten Phase nicht zu sehr belastet wird. Durch das vorgeschlagene Verhältnis wird insgesamt erreicht, dass zwei grundsätzlich verschiedene Anforderungen, nämlich einer möglichst ausgewogenen Nährstoffaufnahme und einer möglichst schnellen Nährstoffaufnahme, auf optimale Weise Rechnung getragen wird.

Ein Verhältnis des Gewichts der ersten kurzkettigen Kohlenhydratkomponente zu dem Gewicht einer langkettigen Kohlenhydratkomponente, durch die die zur ersten Komponente identische zweite Kohlenhydratkomponente bereitgestellt wird, beträgt vorzugsweise 5:1 bis 40:1, weiter vorzugsweise 15:1 bis 25:1, weiter vorzugsweise (etwa) 20:1. In diesem Zusammenhang ist die erste kurzkettige Kohlenhydratkomponente vorzugsweise Glucose. Die langkettige Kohlenhydratkomponente ist vorzugsweise Maltodextrin. Ein Kerngedanke dieser Weiterbildung besteht darin, dass derselbe Zucker (insbesondere Glucose) einerseits als kurzkettige Kohlenhydratkomponente (insbesondere Monosaccharid) zur Verfügung gestellt wird und andererseits indirekt durch eine langkettige Kohlenhydratkomponente, die der menschliche Körper aufschließen kann. Es wird also derselbe Zucker sowohl vergleichsweise schnell (insbesondere über den Dünndarm) als auch zeitverzögert (insbesondere über den Dickdarm) zugeführt. Dadurch kann besonders viel Energie aufgenommen werden. Das vorgeschlagene Verhältnis hat sich dabei als besonders wirkungsvoll erwiesen.

Das Sportgetränk bzw. das Pulver oder Konzentrat zum Anrühren eines solchen weist insbesondere die folgenden Inhaltstoffe auf:
- Glucose, insbesondere in einem Anteil von 70 % - 85 %, vorzugsweise 78 % und/oder
- Fructose, insbesondere in einem Anteil von 28 % - 34 %, vorzugsweise 31 % und/oder
- Saccharose, insbesondere in einem Anteil von 35 % - 47 %, vorzugsweise 41 % und/oder
- Maltodextrin, insbesondere in einem Anteil von 1,0 % - 2,2 %, vorzugsweise 1,6 % und/oder
- Biotin, insbesondere in einem Anteil von 0,00010 % - 0,00022 %, vorzugsweise 0,00016 % und/oder
- Calcium, insbesondere in einem Anteil von 0,350 % - 1,1 %, vorzugsweise 0,84 % und/oder
- Chlorid, insbesondere in einem Anteil von 0,4 % - 0,9 %, vorzugsweise 0,66 % und/oder
- Folsäure, insbesondere in einem Anteil von 0,0004 % - 0,0009 %, vorzugsweise 0,00066 % und/oder
- Kalium, insbesondere in einem Anteil von 0,7 % - 1,3 %, vorzugsweise 1 % und/oder
- Magnesium, insbesondere in einem Anteil von 0,2 % - 0,5 %, vorzugsweise 0,38 % und/oder
- Natrium, insbesondere in einem Anteil von 0,8 % - 1,6 %, vorzugsweise 1,2 % und/oder
- Niacin, insbesondere in einem Anteil von 0,03 % - 0,08 %, vorzugsweise 0,053 % und/oder
- Pantothensäure (Vitamin B5), insbesondere in einem Anteil von 0,01 % - 0,03 %, vorzugsweise 0,02 % und/oder
- Phosphor, insbesondere in einem Anteil von 0,5 % - 0,9 %, vorzugsweise 0,7 % und/oder
- Vitamin A (Provitamin A), insbesondere in einem Anteil von 0,0003 % - 0,0007 %, vorzugsweise 0,00053 % und/oder
- Vitamin B1, insbesondere in einem Anteil von 0,002 % - 0,005 %, vorzugsweise 0,0037 % und/oder
- Vitamin B12, insbesondere in einem Anteil von 0,000006 % - 0,00001 %, vorzugsweise 0,0000085 % und/oder
- Vitamin B2, insbesondere in einem Anteil von 0,003 % - 0,006 %, vorzugsweise 0,0046 % und/oder
- Vitamin B6, insbesondere in einem Anteil von 0,003 % - 0,006 %, vorzugsweise 0,0046 % und/oder
- Vitamin C, insbesondere in einem Anteil von 0,2 % - 0,35 %, vorzugsweise 0,27 % und/oder
- Vitamin E, insbesondere in einem Anteil von 0,03 % - 0,05 %, vorzugsweise 0,06 %.

Durch die vorgeschlagene Zusammensetzung wird insgesamt während allen drei Phasen einer sportlichen Betätigung eine ausgewogene Nährstoff- bzw. Wirkstoffzufuhr realisiert. Insbesondere die B-Vitamine (z.B. Vitamin B1 und/oder Vitamin B6) wirken dabei als Kohlenhydratresorptionsverstärker. Vitamin B1 erhöht die Energie, die den Zellen des Sportlers zur Verfügung steht. Der Energiestoffwechsel wird verbessert. Bei Vitamin B6 wird insbesondere der Glycogenstoffwechsel sowie der Fettstoffwechsel verbessert.

Bei den %-Angaben handelt es sich um Gew.-%-Angaben bezogen auf das Gesamtgewicht des Getränks (oder Pulvers oder Konzentrats zum Anrühren eines solchen) ohne Berücksichtigung von Wasser.

Die oben genannte Aufgabe wird weiterhin gelöst durch ein Verfahren zur Verabreichung eines Sportgetränks der oben beschriebenen Zusammensetzung an einen Sportler, umfassend die Schritte:
Verabreichen einer ersten Portion (vorzugsweise 30 bis 60 min) vor der sportlichen Belastung derart, dass die Mineralstoffe zu Beginn der sportlichen Belastung (im Wesentlichen) resorbiert sind, Verabreichen einer zweiten Portion während der sportlichen Belastung derart, dass eine ausreichende Energieversorgung sichergestellt ist, und Verabreichen einer dritten Portion nach der sportlichen Belastung zur Wiederauffüllung des Kohlenhydrat- und Mineralstoffspeichers für eine optimierte Regeneration. Dieses Verfahren zeichnet sich dadurch aus, dass das Sportgetränk in allen drei Phasen in Zusammenhang mit der sportlichen Betätigung optimiert zum Einsatz kommt. Dadurch wird der organisatorische und logistische Aufwand des Sportlers reduziert.

Nachfolgend werden die charakteristischen Werte eines Ausführungsbeispiels des Sportgetränks gemäß der Erfindung angeführt.

Ausgehend von einer 500 ml Portion (30 g Inhaltsstoffe ohne Berücksichtigung von Wasser) gibt folgende Tabelle vorteilhafte Mengenwerte der einzelnen Inhaltsstoffe an. Bereiche innerhalb derer die jeweilige Substanz variiert werden kann, sind nicht angegeben, können jedoch auf einfache Weise aus den obigen Prozentangaben berechnet werden. Neben den angegebenen Substanzen können noch weitere Substanzen enthalten sein, die beispielweise der Aromatisierung und/oder der Löslichkeit von einzelnen Inhaltsstoffen dienen.

| Inhaltsstoff | | Menge in einer 30 g-Einheit (500 ml des Getränks) |
|---|---|---|
| Eiweiß | | < 0,1 g |
| Kohlenhydrate | | 24 g |
| | davon Zucker | 23,5 g |
| | davon Traubenzucker | 9,2 g |
| | davon Fructose | 2,0 g |
| | davon Saccharose | 12,3 g |
| | davon Maltodextrin | 0,5 g |
| Fett | | < 0,1 g |
| Biotin | | 50 µm |
| Calcium | | 252 mg |
| Chlorid | | 200 mg |
| Folsäure | | 200 µm |
| Kalium | | 300 mg |
| Magnesium | | 114 mg |
| Natrium | | 0,35 g |
| Niacin | | 16 mg |
| Pantothensäure (Vitamin B5) | | 6 mg |
| Phosphor | | 210 mg |
| Vitamin A (Provitamin A) | | 160 µm |
| Vitamin B1 | | 1,1 mg |
| Vitamin B12 | | 2,5 µg |
| Vitamin B2 | | 1,4 mg |
| Vitamin B6 | | 1,4 mg |
| Vitamin C | | 80 mg |
| Vitamin E | | 12 mg |

Durch die B-Vitamine (insbesondere Vitamin B1 und B6) wird insbesondere die Kohlenhydrataufnahme durch die Körperzelle des Sportlers verbessert. Durch das Vitamin C und E wird insbesondere ein Antioxidationsmittel zur Verfügung gestellt, das das Immunsystem des Sportlers stärkt. Die Mineralstoffe dienen vorzugsweise der Versorgung des Sportlers während der sportlichen Betätigung (insbesondere durch Aufnahme in der ersten Phase) und zur Regeneration nach der sportlichen Betätigung (also zur Aufnahme während der dritten Phase).

Weitere Ausführungsformen ergeben sich aus den Unteransprüchen.

## Patentansprüche

1. Sportgetränk, oder Pulver bzw. Konzentrat zum Anrühren eines solchen, umfassend
- mindestens eine Kohlenhydratkomponente zur Energieversorgung, wobei die Kohlenhydratkomponente eine oder mehrere kurzkettige Kohlenhydratkomponenten und eine oder mehrere langkettige Kohlenhydratkomponenten enthält,
wobei das Verhältnis des Gesamtgewichtes der einen oder der mehreren kurzkettigen Kohlenhydratkomponenten zu dem Gesamtgewicht der einen oder der mehreren langkettigen Kohlenhydratkomponenten von 1:100 bis 1:10 beträgt,
- ein Algenpulver zur Verbesserung der Sauerstoffaufnahme in einer Menge von bis zu 0,5 Gew.-%, enthaltend Braunalgen,
- eine Vielzahl von Mineralstoffen, sowie ggf. Vitaminen, in vorbestimmter Menge.

2. Sportgetränk, oder Pulver bzw. Konzentrat zum Anrühren eines solchen, nach einem der vorhergehenden Ansprüche, **gekennzeichnet durch** mindestens ein Monosaccharid, insbesondere Glucose und/oder Fructose, und/oder mindestens ein Disaccharid, insbesondere Saccharose, und/oder mindestens ein Oligosaccharid zur schnellen Regeneration und Energiebereitstellung während der sportlichen Betätigung.

3. Sportgetränk, oder Pulver bzw. Konzentrat zum Anrühren eines solchen, nach einem der vorhergehenden Ansprüche insbesondere nach einem der Ansprüche 1 bis 2,
**dadurch gekennzeichnet, dass**
die mindestens eine langkettige Kohlenhydratkomponente Maltodextrin ist.

4. Verfahren zur Verabreichung eines Sportgetränkes nach einem der vorhergehenden Ansprüche an einen Sportler umfassend die Schritte: Verabreichen einer ersten Portion, vorzugsweise 30 bis 60 min., vor der sportlichen Belastung derart, dass die Mineralstoffe zu Beginn der sportlichen Belastung (im Wesentlichen) resorbiert sind, Verabreichen einer zweiten Portion während der sportlichen Belastung derart, dass eine ausreichende Energieversorgung sichergestellt ist, und Verabreichen einer dritten Portion nach der sportlichen Belastung zur Wiederauffüllung des Kohlenhydrat- und Mineralstoffspeichers für eine optimierte Regeneration.

## Claims

1. Sports drink, or powder or concentrate for mixing such a sports drink, comprising
- at least one carbohydrate component for energy supply, wherein the carbohydrate component contains one or more short-chain carbohydrate components and one or more long-chain carbohydrate components, wherein the ratio of the total weight of the one or more short-chain carbohydrate components to the total weight of the one or more long-chain carbohydrate components is 1:100 to 1:10,
- an algae powder for improving the oxygen uptake in an amount of up to 0.5 wt.%, containing brown algae,
- a plurality of mineral substances, and possibly vitamins, in predetermined amounts.

2. Sports drink, or powder or concentrate for mixing such a sports drink, as claimed in the preceding claims, **characterized by** at least one monosaccharide, in particular glucose and/or fructose, and/or at least one disaccharide, in particular saccharose, and/or at least one oligosaccharide for rapid regeneration and providing energy during the athletic activity.

3. Sports drink, or powder or concentrate for mixing such a sports drink, as claimed in any one of the preceding claims, in particular as claimed in one of claims 1 to 2,
**characterized in that**
the at least one long-chain carbohydrate component is maltodextrin.

4. Method for administering a sports drink as claimed in any one of the preceding claims to an athlete, comprising the following steps:
administering a first portion before, preferably 30 to 60 minutes before the athletic exertion such that the mineral substances are (substantially) resorbed at the beginning of the athletic exertion,
administering a second portion during the athletic exertion such that a sufficient energy supply is ensured, and
administering a third portion after the athletic exertion to refill the carbohydrate and mineral substance stores for optimized regeneration.

## Revendications

1. Boisson énergétique ou poudre/concentré pour la reconstitution d'une telle boisson, comprenant
- au moins une composante glucidique pour l'apport d'énergie, laquelle composante glucidique comprend une ou plusieurs composantes glucidiques à chaîne courte et une ou plusieurs composantes glucidiques à chaîne longue, le rapport entre le poids total des une ou plusieurs composantes glucidiques à chaîne courte et le poids total des une ou plusieurs composantes glucidiques à chaîne longue étant de 1:100 à 1:10 ;
- une poudre d'algues destinée à améliorer l'oxygénation, à raison de jusqu'à 0,5 % en poids, contenant des algues brunes ;
- plusieurs substances minérales, ainsi que des vitamines le cas échéant, en quantité prédéterminée.

2. Boisson énergétique ou poudre/concentré pour la reconstitution d'une telle boisson selon l'une des revendications précédentes, **caractérisée en ce qu'**elle contient au moins un monosaccharide, en particulier du glucose et/ou du fructose, et/ou au moins un disaccharide, en particulier du saccharose, et/ou au moins un oligosaccharide pour la régénération rapide et la fourniture d'énergie pendant l'activité physique.

3. Boisson énergétique ou poudre/concentré pour la reconstitution d'une telle boisson selon l'une des revendications précédentes, en particulier selon l'une des revendications 1 à 2, **caractérisée en ce que** l'au moins une composante glucidique à chaîne longue est de la maltodextrine.

4. Procédé d'administration à un sportif d'une boisson énergétique selon l'une des revendications précédentes, comprenant les étapes suivantes :
administration d'une première portion avant l'effort sportif, de préférence 30 à 60 minutes avant, de telle manière que les substances minérales soient (pour l'essentiel) absorbées au début de l'effort sportif ;
administration d'une deuxième portion pendant l'effort sportif, de manière à assurer une fourniture d'énergie suffisante, et
administration d'une troisième portion après l'effort sportif, afin de reconstituer les réserves de glucides et de substances minérales en vue d'une régénération optimisée.
